**Europäisches Patentamt**

**European Patent Office**

**Office européen des brevets**

(11) Veröffentlichungsnummer: **0 383 118 B1**

(12) **EUROPÄISCHE PATENTSCHRIFT**

(45) Veröffentlichungstag der Patentschrift: **14.06.95**

(21) Anmeldenummer: **90102140.2**

(22) Anmeldetag: **03.02.90**

(51) Int. Cl.⁶: **C08G 63/676**, C08F 283/01

(54) Verfahren zur Herstellung von Kunststoffen einschliesslich Flächengebilden.

(30) Priorität: **16.02.89 DE 3904695**

(43) Veröffentlichungstag der Anmeldung:
**22.08.90 Patentblatt 90/34**

(45) Bekanntmachung des Hinweises auf die
Patenterteilung:
**14.06.95 Patentblatt 95/24**

(84) Benannte Vertragsstaaten:
**AT BE CH DE ES FR GB IT LI NL SE**

(56) Entgegenhaltungen:
**EP-A- 0 127 046**
**EP-A- 0 144 703**
**EP-A- 0 350 730**

(73) Patentinhaber: **BAYER AG**

**D-51368 Leverkusen (DE)**

(72) Erfinder: **Meixner, Jürgen, Dr.**
**Josef-Brocker-Dyk 56**
**D-4150 Krefeld (DE)**

**Beschreibung**

Die Erfindung betrifft ein Verfahren zur Herstellung von Kunststoffen durch thermische Aushärtung von ausgewählten, (Meth)Acryloylgruppen aufweisenden Polyestern.

(Meth)Acryloylgruppen tragende Polyester sind bekannt. Solche sogenannten Polyesteracrylate, die, wie beispielsweise in der DE-OS 28 38 691, 22 61 612, 33 16 593, 19 17 788, 20 33 769, 20 53 683 und 24 23 354 beschrieben, als Umsetzungsprodukte von (Meth)Acrylsäure mit Diolen, Polyolen und Dicarbonsäuren erhalten werden, vernetzen im allgemeinen mit Hilfe von Elektronen- oder UV-Strahlen. Hierzu sind spezielle Apparaturen notwendig. Bei der UV-Härtung werden nur solche Bereiche ausgehärtet, die im Strahlungsbereich der UV-Lampen liegen.

Eine Härtung mittels Radikalbildnern wie Peroxiden, die durch Hitze und/oder Beschleunigern gespalten werden, wird normalerweise nur unter Luftausschluß durchgeführt, da sonst keine klebfreien und/oder kratz- und lösemittelfesten Kunststoffe, insbesondere oberflächen erhalten werden können.

Es war daher die der Erfindung zugrundeliegende Aufgabe, ein neues Verfahren zur Herstellung von Kunststoffen einschließlich Flächengebilden aus (Meth)Acryloylgruppen aufweisenden Polyestern zur Verfügung zu stellen, bei welchem die Aushärtung der ungesättigten Polyester in Anwesenheit von Luftsauerstoff thermisch, gegebenenfalls unter Mitverwendung von Sikkativen und von (Hydro)peroxiden möglich ist.

Diese Aufgabe konnte durch die Bereitstellung des nachstehend näher beschriebenen erfindungsgemäßen Verfahrens gelöst werden. Beim erfindungsgemäßen Verfahren kommen spezielle (Meth)-Acryloylgruppen aufweisende Polyester zum Einsatz, die überraschenderweise auch in Anwesenheit von Luftsauerstoff thermisch aushärtbar sind.

Gegenstand der Erfindung ist ein Verfahren zur Herstellung von Kunststoffen einschließlich Flächengebilden durch Aushärtung von (Meth)Acryloylgruppen aufweisenden Polyestern oder deren Gemischen mit anderen (Meth)acryloylgruppen aufweisenden Kunststoffvorläufern, die, gegebenenfalls in Abmischung mit inerten Hilfs- und Zusatzmittel und/oder mit copolymerisierbaren Monomeren und/oder gegebenenfalls in inerten Lösungsmitteln gelöst oder gegebenenfalls in Wasser emulgiert, formgebend verarbeitet worden sind, dadurch gekennzeichnet, daß man als (Meth)Acryloylgruppen aufweisende Polyester solche verwendet, die aus

A) 0,4 bis 1,0 Mol einer ungesättigten Dicarbonsäurekomponente, bestehend aus Maleinsäure, Maleinsäureanhydrid, Fumarsäure, Tetrahydrophthalsäure, Tetrahydrophthalsäureanhydrid, Norbornendicarbonsäure und/oder Norbornendicarbonsäureanhydrid,

B) 0 bis 0,6 Mol einer anderen Dicarbonsäurekomponente, bestehend aus mindestens einer aromatischen oder gesättigten (cyclo)aliphatischen Dicarbonsäure des Molekulargewichtsbereichs 100 bis 202 und/oder mindestens einem Anhydrid einer derartigen Dicarbonsäure,

C) 0,3 bis 2,0 Mol ethoxyliertes Trimethylolpropan mit einem Molekulargewicht von max. 1000,

D) 0 bis 1,7 Mol einer anderen Alkoholkomponente, bestehend aus mindestens einem ein-, zwei-, drei- oder vierwertigen Alkohol des Molekulargewichts 46 bis 500, der keine Ethylenoxideinheiten als Teil einer Etherstruktur aufweist, und

E) 0,5 bis 6,0 Mol einer ungesättigten Monocarbonsäurekomponente, bestehend aus Acrylsäure und/oder Methacrylsäure

hergestellt worden sind, mit der Maßgabe, daß die Summe der Mole der Komponenten A) und B) 1,0 beträgt, die Summe der Hydroxyläquivalente der Komponenten C) und D) mindestens der Summe der Carboxyläquivalente der Komponenten A), B) und E) entspricht, der Gehalt der Polyester an olefinischen Doppelbindungen (berechnet als $=C=C=$, Molekulargewicht $= 24$) bei 5 bis 17 Gew.-% und die Säurezahl des Polyesters bei 0 bis 50 liegt und

die Aushärtung des Polyesters in Anwesenheit von Luftsauerstoff bei Temperaturen von oberhalb 80 °C durchführt.

Bei der Herstellung der Polyester kommen vorzugsweise

0,5 bis 1,0 Mol der Komponente A),

0 bis 0,5 Mol der Komponente B),

0,5 bis 2,0 Mol der Komponente C),

0 bis 1,6 Mol der Komponente D) und

1,0 bis 4,0 Mol der Komponente E) zum Einsatz, wobei der Gehalt an olefinischen Doppelbindungen (berechnet als $=C=C=$, Molekulargewicht $= 24$) der Polyester vorzugsweise 6,5 bis 15 Gew.-% und die Säurezahl der Polyester vorzugsweise 0 bis 40 beträgt. Die gemachten Angaben bezüglich der Säurezahl beziehen sich auf mg KOH/g Substanz.

Bei der Komponente A) handelt es sich vorzugsweise um Maleinsäureanhydrid oder Tetrahydrophthalsäureanhydrid.

Bei der Komponente B) handelt es sich beispielsweise um Säure wie Phthalsäure, Hexahydrophthalsäure, Isophthalsäure, Terephthalsäure oder Adipinsäure bzw. um Phthalsäureanhydrid bzw. Hexahydrophthalsäureanhydrid.

Bei der Komponente C) handelt es sich um ethoxyliertes Trimethylolpropan mit einem maximalen Molekulargewicht von 1000, vorzugsweise 800 und besonders bevorzugt 398. Ein Molekulargewicht von 398 entspräche einem Ethoxylierungsgrad von 6, wobei der Ethoxylierungsgrad die Anzahl der Mole Ethylenoxid angibt, die an 1 Mol Trimethylolpropan angelagert worden sind.

Bei der Komponente D) handelt es sich um beliebige ein- oder mehrwertige, vorzugsweise zwei- bis vierwertige Alkohole, die keine Ethylenoxideinheiten als Teil einer Etherstruktur aufweisen. Das Molekulargewicht dieser Alkohole liegt vorzugsweise bei 46 bis 500. In Betracht kommen beispielsweise n-Hexanol, Isooctanol, Benzylalkohol, Ethylenglykol, Propylenglykol, Propandiol-1,3, die isomeren Butandiole, Pentandiole, Hexandiole oder Dimethylolcyclohexane, Trimethylolpropan, propoxyliertes Trimethylolpropan und/oder Pentaerythrit.

Zur Herstellung der (Meth)Acryloylgruppen aufweisenden Polyester erhitzt man entweder alle Bestandteile A bis E gemeinsam in einem inerten Lösungsmittel unter den Bedingungen einer azeotropen Veresterungsreaktion solange bis sich kein Wasser mehr abscheidet, oder man stellt zuerst einen OH-haltigen Polyester aus den Komponenten A bis D her und läßt anschließend diesen Polyester mit (Meth)-Acrylsäure unter azeotropen Veresterungsbedingungen in einem inerten Lösungsmittel reagieren bis sich kein Wasser mehr abscheidet, oder man stellt zuerst einen COOH-Gruppen-haltigen Polyester aus der Komponente A und B und einen Teil der Komponenten C und/oder D her und läßt anschließend die restlichen Komponenten mit dem Polyester unter azeotropen Veresterungsbedigungen in einem inerten Lösungsmittel reagieren bis sich kein Wasser mehr abscheidet.

In allen Fällen wird nach der Reaktion das Lösungsmittel destillativ entfernt. Gegebenenfalls kann eine Nachbehandlung des Endprodukts zur Erzielung einer geringeren Säurezahl durchgeführt werden, wie z.B. die Reaktion mit Carbodiimiden nach DE-OS 35 14 402 bzw. mit Epoxiden nach DE-OS 33 16 593.

Die zur Herstellung der Polyester(meth)acrylate angewandten azeotropen Veresterungsbedingungen sind die klassischen Bedingungen, d.h. man verwendet einen Veresterungskatalysator, beispielsweise Schwefelsäure oder p-Toluolsulfonsäure und erhitzt die Reaktionsteilnehmer in Anwesenheit eines oder mehrerer Inhibitoren, wie Hydrochinonmonomethylether, sowie Luftsauerstoff (gegen vorzeitige Polymerisation) in einem inerten Lösungsmittel wie Cyclohexan, Isooktan oder Toluol und entfernt das entstehende Reaktionswasser aus dem System. Im allgemeinen erfolgt die Herstellung der Polyester innerhalb des Temperaturbereichs von 70 bis 130°C.

Bei den so erhaltenen (Meth)Acryloylgruppen aufweisenden Polyestern handelt es sich im allgemeinen um flüssige Produkte, die bei 23°C eine Viskosität von 1 bis 100 Pa.s aufweisen.

Die Überführung der ungesättigten Polyester, die Kunststoffvorläufer darstellen, in ausgehärtete Kunststoffe erfolgt im allgemeinen nach vorangegangener Formgebung.

Der Begriff "Kunststoffe" soll sowohl beliebige dreidimensionale, ausgehärtete Formkörper als auch ausgehärtete Kitte oder Spachtelmassen oder Flächengebilde, insbesondere ausgehärtete Lacküberzüge umfassen. Dementsprechend soll der Begriff "Formgebung" u.a. auch die Herstellung von Flächengebilden, beispielsweise von Lacküberzügen oder auch die Verarbeitung von Kitten oder Spachtelmassen umfassen.

Je nach angestrebtem Verwendungszweck und in Abhängigkeit von der Viskosität können die (Meth)-Acryloylgurppen aufweisenden Polyester vor der Formgebung mit inerten Hilfs- und Zusatzmitteln der unterschiedlichsten Art abgemischt werden. Hierzu gehören Füllstoffe, Pigmente, Farbstoffe, Thixotropiermittel, Glättmittel, Mattierungsmittel und Verlaufmittel, die in üblichen Mengen eingesetzt werden können. Insbesondere zur Herstellung von Lacküberzügen können die (Meth)Acryloylgruppen aufweisenden Polyester auch in an sich bekannten Lacklösungsmitteln gelöst, mit copolymerisierbaren Monomeren abgemischt oder in Wasser emulgiert zum Einsatz gelangen.

Geeignete Lösungsmittel sind beispielsweise Butylacetat, Cyclohexan, Aceton, Toluol oder Gemische derartiger Lösungsmittel.

Beispiele für geeignete copolymerisierbare Monomere sind organische Verbindungen, die mindestens eine copolymerisierbare olefinische Doppelbindung pro Molekül und bei 23°C eine Viskosität von maximal 500 mPa.s aufweisen. Hierzui gehören beispielsweise Styrol, 1,6-Hexandioldiacrylat, Trimethylolpropantriacrylat oder N-Vinylpyrrolidon.

Die inerten Lösungsmittel und auch die copolymerisierbaren Monomeren können in Mengen von jeweils bis zu 100 Gew.-%, vorzugsweise bis zu 50 Gew.-%, bezogen auf das Gewicht der (Meth)Acryloylgruppen aufweisenden Polyester eingesetzt werden.

Es ist auch möglich, gleichzeitig sowohl inerte Lösungsmittel der beispielhaft genannten Art als auch copolymerisierbare Monomere der beispielhaft genannten Art einzusetzen.

Es ist ebenfalls möglich, vor der Aushärtung die (Meth)Acryloylgruppen aufweisenden Polyester mit anderen (Meth)Acryloylgruppen aufweisenden Kunststoffvorläufern, insbesondere Urethan(meth)acrylaten abzumischen. Diese, gegebenenfalls einzusetzenden Kunststoffvorläufer weisen bei 23°C im allgemeinen eine über 10 000 mPa.s liegende Viskosität auf. Diese Zusätze können in Mengen von bis zu 200 Gew.-%, vorzugsweise bis zu 100 Gew.-%, bezogen auf das Gewicht der (Meth)Acryloylgruppen aufweisenden Polyester verwendet werden.

Falls die (Meth)Acryloylgruppen aufweisenden Polyester aus wäßriger Emulsion verarbeitet werden sollen, kann die Herstellung entsprechender wäßriger Emulsionen beispielsweise mit Hilfe externer Emulgatoren und gegebenenfalls üblicher in der Emulsionstechnik angewandter Hilfsmittel erfoigen.

Hierfür geeignete Emulgatoren sind bekannt und z.B. in Ullmanns Encyclopädie der techn. Chemie, Bd. 10, 4. Auflage, Kap. Emulsionen, S. 449 ff. beschrieben.

Bevorzugte Emulgatoren sind copolymerisierbare (Meth)Acryloylgruppen enthaltende Polyesteremulgatoren, wie sie in der DE-OS 32 41 264 beschrieben sind.

Die wäßrigen Emulsionen enthalten im allgemeinen 10 bis 70 Gew.-%, vorzugsweise 30 bis 70 Gew.-% der erfindungswesentlichen (Meth)Acryloylgruppen aufweisenden Polyester. Die Herstellung der Emulsionen kann durch Einrühren von Wasser in das Gemisch aus erfindungsgemäßem Polyester(meth)acrylat und Emulgator z.B. durch einfaches Rühren oder mittels Dissolver erfolgen.

Zur Ausbildung einer feinteiligen Emulsion, d.h. zur besseren Einbringung der Schwerkräfte ist portionsweiser Wasserzusatz bei Temperaturen unter 30°C vorteilhaft. Bei optimaler Scherung werden Öl-in-Wasser-Emulsionen gebildet.

Bei allen Varianten des erfindungsgemäßen Verfahrens erfolgt die Aushärtung, gegebenenfalls nach Verdunsten von flüchtigen Hilfsmitteln wie inerte Lösungsmittel oder Wasser, durch eine thermische Behandlung bei über 80°C. Gemäß einer bevorzugten Ausführungsform wird die Aushärtung durch Zusatz von Polymerisationsinitiatoren und von Sikkativen der an sich bekannten Art unterstützt. Im Falle der Gegenwart derartiger Hilfsmittel sind im allgemeinen Aushärtungstemperaturen von 80 bis 160, vorzugsweise 90 bis 150°C ausreichend.

Geeignete Polymerisationsinitiatoren sind insbesondere (Hydro)Peroxide der an sich bekannten Art wie tert.-Butylperbenzoat, Benzoylperoxid, Cyclohexanonperoxid, Methylethylketonperoxid, Acetylacetonperoxid, tert.-Butyl-per-2-ethylhexanoat, Bis-(4-tert.butylcyclohexyl)peroxydicarbonat, tert.-Butylhydroperoxid, Cumolhydroperoxid, 2,5-Di-methylhexan-2,5-hydroperoxid und Diisopropyl-benzolmonohydroperoxid. Vorzugsweise werden diese (Hydro)Peroxide in Mengen von 0,5 bis 3 Gew.-%, bezogen auf das Gewicht der (Meth)Acryloylgruppen aufweisenden Polyester, eingesetzt.

Die neben den beispielhaft genannten Polymerisationsinitiatoren zur Anwendung gelangenden Sikkative sind ebenfalls solche der an sich bekannten Art wie beispielsweise Kobalt-, Blei- und Mangansalze von Säuren wie Leinölfettsäuren, Tallölfettsäure, Sojaölfettsäuren, von Harzsäuren wie Abietinsäure und Naphthensäure oder von Essigsäure und Isooctansäure. Sie werden in Form von organischen Lösungen in solchen Mengen eingesetzt, daß der Metallgehalt, bezogen auf das Gewicht der (Meth)Acryloylgruppen aufweisenden Polyester 0,001 bis 0,1 Gew.-% ausmacht.

Im Falle eines Verzichts auf die Mitverwendung von Polymerisationsinitiatoren und Sikkativen liegt die Temperatur der erfindungsgemäßen Aushärtung im allgemeinen bei mindestens 150°C, vorzugsweise bei 150 bis 190°C. Selbstverständlich ist es jedoch auch möglich, einerseits Polymerisationsinitiatoren und Sikkative der beispielhaft genannten Art einzusetzen und andererseits dennoch die zuletzt genannten hohen Temperaturen zur Anwendung zu bringen, um eine beschleunigte Aushärtung zu erreichen.

In den nachfolgenden Beispielen beziehen sich alle Prozentangaben auf das Gewicht.

Beispiele

In den nachfolgend tabellarisch zusammengefaßten, erfindungsgemäßen Herstellungsbeispielen 1 bis 5 sowie Vergleichsbeispiele 6 und 7 werden jeweils zunächst in der ersten Stufe die Ausgangskomponenten A), B) und D) unter Stickstoff während 6 Stunden auf 150 bis 185°C in Abwesenheit von sonstigen Zusatzstoffen erhitzt.

Die Durchführung der zweiten Stufe des erfindungsgemäßen Verfahrens erfolgte jeweils in 60 %iger Lösung in Cyclohexan in Gegenwart von 1,5 % p-Toluolsulfonsäure als Katalysator und von 0,3 % p-Methoxyphenol als Inhibitor, stets bezogen auf die Summe der Komponenten A) bis E). Nach Zugabe der Komponenten C) und E) sowie Katalysatoren und Inhibitoren und Cyclohexan wird das Gemisch unter Durchleiten von Luft weiter bei 80 bis 100°C so lange erhitzt, bis sich kein Wasser mehr abscheidet. Nach Abkühlen wird bei 50 bis 90°C das Lösungsmittel unter Vakuum abdestilliert.

4

Tabelle 1

| Ausgangsmaterialien (Mengenangaben in Mol) | erfindungsgemäße Beispiele | | | | | Vergleichsbeispiele | |
|---|---|---|---|---|---|---|---|
| | 1 | 2 | 3 | 4 | 5 | 6 | 7 |
| A) Maleinsäureanhydrid | 1,0 | 0,5 | | 1,0 | 1,0 | 1,0 | |
|     Tetrahydrophthalsäure-anhydrid | | | | | | | |
| B) Phthalsäureanhydrid | | 0,5 | 1,0 | | | | 0,4 |
|     Adipinsäure | | | | | | | 0,6 |
| C) ethoxyliertes Trimethyl-olpropan (Ethoxylierungs-grad: 4) | 1,0 | 1,0 | 1,0 | 1,0 | 0,7 | | 1,0 |
|     propoxyliertes Trimethyl-propan (Propoxylierungs-grad: 3) | | | | | | 1,0 | |
| D) Propandiol-1,2 | 0,5 | 0,5 | 0,5 | 0,5 | 0,7 | 0,5 | 0,5 |
| E) Acrylsäure | 1,8 | 1,8 | 1,8 | | 1,3 | 1,8 | 1,8 |
|     Methacrylsäure | | | | 1,8 | | | |
| **Eigenschaften des Polyesters** | | | | | | | |
| Säurezahl (mg KOH/g Substanz) | 16 | 33 | 26 | 36 | 16 | 27 | 39 |
| Viskosität (mPa.s,23°C) | 7200 | 6000 | 16400 | 3600 | 12600 | 8100 | 2700 |
| (Meth)Acryloyl-Doppel-bindungsgehalt (ge-rechnet als MG 24) | 8,2 | 7,8 | 7,5 | 7,8 | 7,4 | 8,3 | 7,7 |

Verwendungsbeispiele 1 bis 5 (erfindungsgemäß) und 6 und 7 (Vergleichsbeispiele)

Die Produkte der vorstehenden Beispiele 1 bis 7 werden mit 1,5 % tert.-Butylperbenzoat und 1 % Kobaltoctoat (2,2 % Metallgehalt) versetzt. Nach Auftragen der Lackfilme auf Glasplatten werden sie 30 Minuten bei 130 °C erhitzt. Die resultierenden, trockenen Lackschichten weisen eine Dicke von ca. 100 μm

auf.

In Tabelle 2 sind die erhaltenen Filmeigenschaften aufgeführt.

## Tabelle 2

| | Verwendungsbeispiele | | | | | Vergleichsbeispiele | |
|---|---|---|---|---|---|---|---|
| | 1 | 2 | 3 | 4 | 5 | 6 | 7 |
| Pendelhärte (sec) a) | 120 | 77 | 45 | 92 | 160 | nicht meßbar, da Oberfläche klebrig | nicht meßbar, da Oberfläche klebrig |
| Lösungsmittelfestigkeit b) | gut | gut | gut | gut | gut | - | - |

a) Die Pendelhärten werden nach König (DIN 53 157) bestimmt

b) Zur Bestimmung der Lösemittelfestigkeit wird ein mit Lösemittel getränkter Wattebausch 1 Minute lang auf den Lackfilm gelegt. Danach wird durch Ankratzen mit dem Fingernagel die Filmveränderung beurteilt. Als Lösemittel wird Toluol, Methoxypropylacetat, Ethylacetat und Aceton verwendet.

Außer bei Vergleichsbeispiel 6 und 7 sind die Oberflächen der Lackfilme gar nicht oder nur schwer ankratzbar.

Während mit den erfindungsgemäßen produkten der Beispiele 1 bis 5 sowohl harte als auch lösemittelfeste Beschichtungen entstehen, zeigen die produkte der Vergleichsbeispiele 6 und 7 keine ausreichende Eigenschaften.

**Patentansprüche**

1. Verfahren zur Herstellung von Kunststoffen einschließlich Flächengebilden durch Aushärtung von (Meth)Acryloylgruppen aufweisenden Polyestern oder deren Gemischen mit anderen (Meth)-acryloylgruppen aufweisenden Kunststoffvorläufern, die, gegebenenfalls in Abmischung mit inerten Hilfs- und Zusatzmittel und/oder mit copolymerisierbaren Monomeren und/oder gegebenenfalls in inerten Lösungsmitteln gelöst oder gegebenenfalls in Wasser emulgiert, formgebend verarbeitet worden sind, dadurch gekennzeichnet, daß man
als (Meth)Acryloylgruppen aufweisende Polyester solche verwendet, die aus
   A) 0,4 bis 1,0 Mol einer ungesättigten Dicarbonsäurekomponente, bestehend aus Maleinsäure, Maleinsäureanhydrid, Fumarsäure, Tetrahydrophthalsäure, Tetrahydrophthalsäureanhydrid, Norbornendicarbonsäure und/oder Norbornendicarbonsäureanhydrid,
   B) 0 bis 0,6 Mol einer anderen Dicarbonsäurekomponente, bestehend aus mindestens einer aromatischen oder gesättigten (cyclo)aliphatischen Dicarbonsäure des Molekulargewichtsbereichs 100 bis 202 und/oder mindestens einem Anhydrid einer derartigen Dicarbonsäure,
   C) 0,3 bis 2,0 Mol ethoxyliertes Trimethylolpropan mit einem Molekulargewicht von max. 1000,
   D) 0 bis 1,7 Mol einer anderen Alkoholkomponente, bestehend aus mindestens einem ein-, zwei-, drei- oder vierwertigen Alkohol des Molekulargewichts 46 bis 500, der keine Ethylenoxideinheiten als Teil einer Etherstruktur aufweist, und
   E) 0,5 bis 6,0 Mol einer ungesättigten Monocarbonsäurekomponente, bestehend aus Acrylsäure und/oder Methacrylsäure
hergestellt worden sind, mit der Maßgabe, daß die Summe der Mole der Komponenten A) und B) 1,0 beträgt, die Summe der Hydroxyläquivalente der Komponenten C) und D) mindestens der Summe der Carboxyläquivalente der Komponenten A), B) und E) entspricht, der Gehalt der Polyester an olefinischen Doppelbindungen (berechnet als $=C=C=$, Molekulargewicht = 24) bei 5 bis 17 Gew.-% und die Säurezahl des Polyesters bei 0 bis 50 liegt und
die Aushärtung des Polyesters in Anwesenheit von Luftsauerstoff bei Temperaturen von oberhalb 80°C durchführt.

2. Verfahren gemäß Anspruch 1, dadurch gekennzeichnet, daß man die Aushärtung des Polyesters in Gegenwart von (Hydro)peroxiden und von Sikkativen durchführt.

3. Verfahren gemäß Anspruch 1, dadurch gekennzeichnet, daß man die Aushärtung des Polyesters in Abwesenheit von (Hydro)peroxiden und von Sikkativen bei Temperaturen von oberhalb 150°C durchführt.

4. Verfahren gemäß Anspruch 1 bis 3, dadurch gekennzeichnet, daß man als Polyester solche verwendet, die durch Umsetzung von
0,5 bis 1,0 Mol einer Komponente A),
0 bis 0,5 Mol einer Komponente B),
0,5 bis 2,0 Mol einer Komponente C),
0 bis 1,6 Mol einer Komponente D) und
1,0 bis 4,0 Mol einer Komponente E) hergestellt worden sind, und die 6,5 bis 15,0 Gew.-% an olefinischen Doppelbindungen (Molekulargewicht = 24) und eine Säurezahl von 0 bis 40 aufweisen.

**Claims**

1. Process for the production of plastics, including flat products, by curing polyesters containing (meth)-acryloyl groups, or mixtures thereof with other plastics precursors containing (meth)acryloyl groups, which polyesters or mixtures have been shaped, optionally in a mixture with inert auxiliary substances and additives and/or with copolymerisable monomers and/or optionally dissolved in inert solvents or optionally emulsified in water, characterised in that
the polyesters containing (meth)acryloyl groups used are those which have been prepared from

A) 0.4 to 1.0 mol of an unsaturated dicarboxylic acid component, consisting of maleic acid, maleic anhydride, fumaric acid, tetrahydrophthalic acid, tetrahydrophthalic anhydride, norbornenedicarboxylic acid and/or norbornenedicarboxylic anhydride,

B) 0 to 0.6 mol of another dicarboxylic acid component, consisting of at least one aromatic or saturated (cyclo)aliphatic dicarboxylic acid in the molecular weight range of 100 to 202 and/or at least one anhydride of such a dicarboxylic acid,

C) 0.3 to 2.0 mol of ethoxylated trimethylolpropane having a molecular weight of maximally 1000,

D) 0 to 1.7 mol of another alcohol component, consisting of at least one monohydric, dihydric, trihydric or tetrahydric alcohol of a molecular weight of from 46 to 500, which contains no ethylene oxide units as part of an ether structure and

E) 0.5 to 6.0 mol of an unsaturated monocarboxylic acid component, consisting of acrylic acid and/or methacrylic acid,

with the proviso that the sum of the moles of components A) and B) is 1.0, the sum of the hydroxyl equivalents of components C) and D) corresponds to at least the sum of the carboxyl equivalents of components A), B) and E), the content of olefinic double bonds (calculated as $=C=C=$, molecular weight = 24) in the polyesters is from 5 to 17% by weight and the acid number of the polyester is 0 to 50 and

curing of the polyester is carried out in the presence of atmospheric oxygen at temperatures of above 80°C.

2. Process according to claim 1, characterised in that curing of the polyester is carried out in the presence of (hydro)peroxides and drying agents.

3. Process according to claim 1, characterised in that curing of the polyester is carried out at temperatures of above 150°C in the absence of (hydro)peroxides and drying agents.

4. Process according to claims 1 to 3, characterised in that the polyesters used are those which have been prepared by reacting
0.5 to 1.0 mol of a component A),
0 to 0.5 mol of a component B),
0.5 to 2.0 mol of a component C),
0 to 1.6 mol of a component D) and
1.0 to 4.0 mol of a component E), and which contain from 6.5 to 15.0% by weight of olefinic double bonds (molecular weight = 24) and have an acid number of 0 to 40.

## Revendications

1. Procédé pour la fabrication de matières synthétiques, y compris des produits plats, par durcissement de polyesters présentant des groupes (méth)acryloyle ou de leurs mélanges avec d'autres précurseurs de matières synthétiques présentant des groupes (méth)acryloyle, qui ont été soumis à un traitement de façonnement, éventuellement en mélange avec des adjuvants et des additifs inertes et/ou avec des monomères copolymérisables et/ou en étant éventuellement dissous dans des solvants inertes ou éventuellement émulsifiés dans de l'eau, caractérisé en ce qu'on utilise,
comme polyesters présentant des groupes (méth)acryloyle, ceux qui ont été préparés à partir de

A) 0,4 à 1,0 mole d'un composant d'acide dicarboxylique insaturé constitué par l'acide maléique, l'anhydride maléique, l'acide fumarique, l'acide tétrahydrophtalique, l'anhydride tétrahydrophtalique, l'acide norbornènedicarboxylique et/ou l'anhydride norbornènedicarboxylique,

B) 0 à 0,6 mole d'un autre composant d'acide dicarboxylique constitué par au moins un acide dicarboxylique aromatique ou (cyclo)aliphatique saturé du domaine de poids moléculaire de 100 à 202 et/ou au moins par un anhydride d'un acide dicarboxylique de ce type,

C) 0,3 à 2,0 moles de triméthylolpropane éthoxylé possédant un poids moléculaire de maximum 1000,

D) 0 à 1,7 mole d'un autre composant d'alcool constitué par au moins un alcool mono-, bi-, tri- ou tétravalent du poids moléculaire de 46 à 500, qui ne présente pas d'unités d'oxyde d'éthylène comme fraction d'une structure éther, et

E) 0,5 à 6,0 moles d'un composant d'acide monocarboxylique insaturé constitué par l'acide acrylique et/ou par l'acide méthacrylique,

avec cette mesure que la somme des moles des composants A) et B) s'élève à 1,0, la somme des équivalents hydroxyle des composants C) et D) correspond au moins à la somme des équivalents carboxyle des composants A), B) et E), la teneur des polyesters en doubles liaisons oléfiniques (calculée comme $=C=C=$, poids moléculaire $= 24$) se situe de 5 à 17% en poids et l'indice d'acide du polyester se situe de 0 à 50, et

on effectue le durcissement du polyester en présence d'oxygène atmosphérique, à des températures supérieures à 80°C.

2. Procédé selon la revendication 1, caractérisé en ce qu'on effectue le durcissement du polyester en présence d'(hydro)peroxydes et de siccatifs.

3. Procédé selon la revendication 1, caractérisé en ce qu'on effectue le durcissement du polyester en l'absence d'(hydro)peroxydes et de siccatifs à des températures supérieures à 150°C.

4. Procédé selon les revendications 1 à 3, caractérisé en ce que, comme polyesters, on utilise ceux qui ont été préparés par mise en réaction de

0,5 à 1,0 mole d'un composant A),

0 à 0,5 mole d'un composant B),

0,5 à 2,0 moles d'un composant C),

0 à 1,6 mole d'un composant D) et

1,0 à 4,0 moles d'un composant E), et qui présentent de 6,5 à 15,0 % en poids de doubles liaisons oléfiniques (poids moléculaire $= 24$) et un indice d'acide de 0 à 40.